Europäisches Patentamt

European Patent Office

Office européen des brevets

(11) Publication number: **0 184 579**
**B1**

(12) EUROPEAN PATENT SPECIFICATION

- (45) Date of publication of patent specification: **23.11.89**

(21) Application number: **85890294.3**

(22) Date of filing: **28.11.85**

(51) Int. Cl.⁴: **B 65 G 67/04**

(54) Method and apparatus for the transfer of, in particular, construction elements onto a transportation bed.

| | |
|---|---|
| (30) Priority: **05.12.84 FI 844811** | (73) Proprietor: **Lohja Parma Engineering Oy**<br>**SF-03100 Nummela (FI)** |
| (43) Date of publication of application:<br>**11.06.86 Bulletin 86/24** | (72) Inventor: **Nurminen, Matti**<br>**Rinnekatu 8**<br>**SF-30100 Forssa (FI)** |
| (45) Publication of the grant of the patent:<br>**23.11.89 Bulletin 89/47** | |
| | (74) Representative: **Wolfram, Gustav, Dipl.-Ing.**<br>**Schwindgasse 7 P.O. Box 205**<br>**A-1041 Wien (AT)** |
| (84) Designated Contracting States:<br>**AT BE CH DE FR GB IT LI NL SE** | |
| (56) References cited:<br>**DE-A-1 756 629**<br>**DE-A-2 022 438**<br>**DE-A-2 122 470** | |

Courier Press, Leamington Spa, England.

## Description

The present invention relates to a method in accordance with the preamble of claim 1 for the transfer of plate-shaped products from a support means comprising two independent storage stands onto a transportation bed. The method in accordance with the preamble of claim 1 is known per se.

Generally speaking, the method is carried out by stacking the plate-shaped products onto two storage stands, driving the transportation bed to underneath the goods to be transferred, and inclining the supports of the stands in their transverse direction until they are dumped and the goods are transferred onto the bed.

The invention also relates to an inclinable storage stand in accordance with the preamble of claim 3 for carrying out the method. The storage stand in accordance with the preamble of claim 3 is known per se.

At present, construction materials are generally transferred by road transportation from factories or stores to construction sites. In order to maintain tight schedules, especially the deliveries of construction elements must take place at the right time and in the correct sequence. During the busiest seasons of construction, this may lead to congestion at the element factories and stores. The bottleneck of deliveries has proved to be the loading of transportation vehicles. Loading is generally arranged so that the elements are transferred either from the store or directly from production, using a separate crane onto the transportation bed, typically on the platform of a truck or trailer. Thus, only so many elements can be loaded as there are available cranes, or a separate crane for each truck to be loaded is required. This factor has tended to increase loading and material handling costs at stores and factories.

The object of the invention is to simplify the handling of construction materials and to provide a novel method for transferring plate-shaped goods, especially concrete panels, from the storage premises onto a transportation bed. Effective utilization of the invention even includes the minimization of construction costs at the construction site by precisely maintaining delivery schedules. The inflexibility of deliveries from the production factory to the construction sites often generates excessive additional costs at the construction site. For operations at the construction site, the exact maintaining of the delivery time and correct loading method of elements are the principal factors in element deliveries. To avoid unnecessary on- and off-loading, the system operates so that the construction site gives the factory instructions each day for the delivery needs of the next day. This ensures a flexible system for the construction site, for instance, by taking into account such factors as weather conditions at the construction site and the rate of progress in fixed-fee operations which often bring changes in the plans.

At the construction site, an inflexible system often causes either waiting periods at unloading, or additional temporary storage or unloading. If the effective operating efficiency of element mounting personnel or crane machinery is thus decreased, also other indirect costs are created in addition to the costs mentioned above, such as the heating and fixed costs caused by the lengthening of the construction time. When these costs are taken into account, it is clear that the most advantageous method for the operation of the entire system is to deliver construction elements to the construction site exactly according to the time schedule expressed by the construction site.

Due to weather conditions and coinciding delivery times to different sites, the need of transportation equipment usually varies greatly from day to day. Consequently, the storage, load, dispatch, and transportation operations must be grossly overdimensioned at the factory compared to the average loading degree of these functions. Furthermore, these factors cause additional wage costs and heavy investments (in the form of several cranes required, large storage premises, working outdoors). All this can be avoided by applying the storage system in accordance with the invention.

The starting point of this invention is the storage of products in ready-packed bundles (=loads). The prerequisite for the operation of this system is an exact installation order of elements, received from the construction site, to enable correct sequential bundling of the loads.

In practice, the system control is handled by a computer program. The input data is transferred after processing within the element design CAD program to the CAM program of the production factory. At this stage, the file is complemented with element delivery times and element mounting order according to instructions from the construction site.

When defining the production program, the CAM program takes into account the mounting schedules and mounting order requirements of the construction site to allow immediate compilation of loads when the products are received from the production line. Then, the products are continuously bundled straight from the production line without temporary storage or intermediate transfers. At the same time, the loading operations are transferred indoors, avoiding wasted time caused by weather changes and minimizing corrosion load on equipment located outdoors. Because the packing of load bundles is done on-line and the load data for the bundles is continuously available from the production program, the operation is performed in a controlled manner, leading to a lower need for investments and personnel for the loading equipment.

However, the essential invention of the storage system is the storage stand. When the load bundle has been transferred forth from the factory to a storage area onto the storage stand, the transportation vehicle driver can transfer the load onto the truck bed alone at his convenience. Thus, this method almost totally eliminates the conventional manning for storage and loading as well as the need for crane equipment. Furthermore, the system requires only one load bundler in the factory and a transfer vehicle driver for transferring the bundles to the outdoors area.

The system achieves a high flexibility of delivery times compared to the size of construction site and, consequently, offers savings in construction costs and disposes of storage lifts and all loading personnel at the factory. Simultaneously, the system also diminishes transportation costs because the load bundle can be transferred onto the transportation vehicle at any time convenient for the driver.

Savings in on-loading time remarkably increase the mileage perfomance of the truck fleet, allowing the expensive fleet to be used mostly for effective transportation instead of waiting in a queue for unloading, as is customary.

The system can be described with the following concise features:

- The store size is not limited because the staging yard need not be located within the operating range of a crane.

- The fleet quantity is not bound to on-loading time; therefore an unlimited quantity of trucks can be on the road simultaneously.

- The on-loading time is short, eliminating truck waiting times at the factory.

- The truck driver is capable of handling the onloading alone.

- The storage can be operated unmanned, without idling periods or weather associated problems.

- The elements are sequentially bundled in the load, in their correct installation order.

- The elements will not be broken during storage.

- The on-loading is not limited by the operating time, availability, operating radius, or operational loading of the staging yard crane.

The invention will be examined in detail in the following:

The invention is based on the idea that the elements are stored upon one another on such storage stands that will allow the elements to be transferred onto a desired platform by inclining the stands, the support members of the stands being properly formed to enable this operation. Thus, such a storage stand comprises two support members spaced from each other a predetermined distance, each of said support members having a horizontal foot member facing the ground and a vertical leg member, the lower end of which is connected to the horizontal foot member via a pivot such that the leg member is inclinable in relation to the foot member, and a horizontal beam member interconnecting the upper ends of said vertical leg members, said leg members being fitted normal to the longitudinal axis of said beam member.

Inclinable storage stands provided with pivots of the above-described type are known from DE—OS 1 756 629. Said publication discloses a loading device for vehicles, especially motor vehicles, for picking up and depositing loads with a carrier member to be accommodated on a loading platform of the vehicle as well as for picking up a load and provided with a lifting device engaging the carrier member. Since the foot members of said prior art storage stands comprise a rigid base plate, the stands are mounted in fixed relationship to one another and may not easily be adapted for use with goods of variable dimension. Furthermore, although there is a buffer means for stopping the tilting movement of the leg members, the prior art publication does not disclose any means for resisting the inclination movement.

In contrast to the prior art, the present invention provides a method for the transfer of plate-shaped products from a support means onto a transportation bed for further transportation, wherein two independent storage stands are provided with damping members installed between the vertical leg members of the stands and their horizontal feet members for reducing the force of the inclination movement of the stands.

The method in accordance with the invention is characterized by what is stated in the characterizing part of claim 1.

The inclinable storage stand in accordance with the invention is characterized by what is stated in the characterizing part of claim 3.

In practice, the method in accordance with the invention may be put into practice, for instance, as follow:

The plate-shaped products, preferably one or several concrete panels, are stacked one by one by means of a crane onto two parallel storage stands so that the elements remain as supported at both ends by the stands. The elements with the stands are hereafter transferred to the storage area, for example, by using such a transportation vehicle which is provided with hydraulically adjustable lifting means.

When the elements are to be transferred from the stands onto a transportation bed, the transportation bed is first driven to underneath the elements, preferably in the longitudinal direction of the elements, whereby the transportation bed is also, at the same time, driven underneath both horizontal beams of the stands supporting the load. Next, a force is directed at the load to be transferred in its longitudinal direction, for instance, by coupling one of the storage stands with a pulling chain or equivalent to the transportation bed or to the vehicle and by pulling the load placed on the stands forwards in this manner. The force can also be directed in a similar manner directly at the load to be transferred. Owing to said force, the goods to be transferred are brought into a movement which is directed in the longitudinal direction of the elements forwards and downwards. To reduce the force of the movement, the storage stand can be attached to the vehicle with a pull bar which at the beginning of the transfer phase initiates the inclination of the stands, but at the final stage resists too fast inclination, regulating the tilt in a controlled manner according to the forward movement of the truck. In this method, the panels are transferred by a controlled movement onto the transportation bed when the storage stands are inclined.

According to a preferred embodiment of the method, the goods remain on the transportation bed, supported by the transverse beams of the stands. Thereby, the leg members of the stands must be detached from the transverse beams before the panel load can be dispatched. The leg members can be attached to another transverse beam and used again in the storage and loading operations according to the method.

In the following, a preferred construction of storage stands intended for carrying out the method will be examined more closely with the aid of the attached drawings.

Figure 1a shows a storage stand in accordance with the invention as a side view and Figure 2 correspondingly as a front view, i.e., as viewed in the transverse direction of the stand. Figures 1b and 1c show some details of the stand in the transverse direction.

Figures 3...5 are illustrations of principle of the use of the stand described above for carrying out the method in accordance with the invention.

Figure 6 shows an alternative embodiment of the invention from the side as a partial cross sectional view.

Figure 7 shows a third alternative embodiment of the invention from the side.

The storage stand comprises two identical support parts or members 1, 7 which are connected at their upper ends by a transverse beam member 6. The transverse beam 6 is a so-called H profile beam in this case, but its cross section may as well be square or even circular. In a preferred embodiment of the method, when the goods remain on the transportation bed supported by the transverse beam 6, the cross-sectional shape of this beam is preferably a lying H or square.

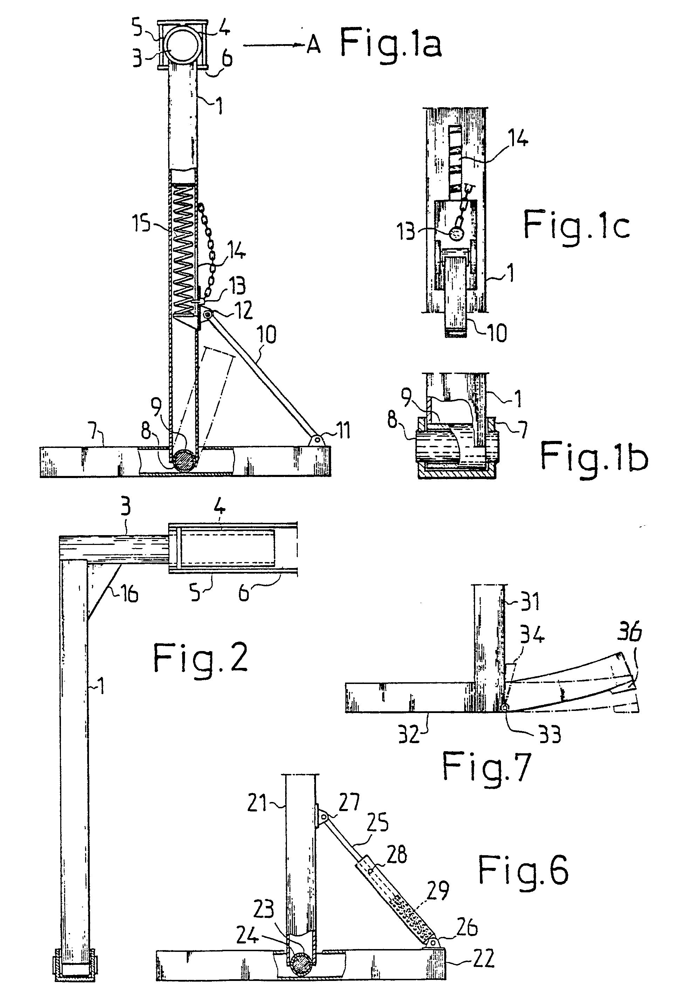

Figure 1a shows the construction of one of the support members. It comprises a vertical leg member or stilt 1, perpendicular to said transverse beam 6, of metal or equivalent material, preferably of steel, e.g. of stainless steel, or of aluminium. The leg member 1 is connected at its upper end perpendicularly to a round tube 3. The joint between the leg member 1 and the tube is enforced by means of an angle bar 16. The tube 3 is fitted inside a second round tube 4 of slightly larger diameter, preferably so that it may revolve freely inside this larger tube. Furthermore, the tube 4 is connected with a suitable method, for instance by welding, to the transverse beam 6. At its lower end the leg member 1 is connected to a horizontal foot member 7 via a pivotal shaft 8, 9. In practice, this is carried out by securing, e.g. by welding, a bushing to the lower part of support 1, said bushing being fitted around a shaft 8, attached to the foot member 7 as shown in Figure 1b. The upper surface and the sides of the foot member 7 are provided with notches so that the leg member 1 may be tilted, supported by the ends of the bushing 9, by an angle of about 5...60°, preferably about 30°, in relation to the vertical position, as shown by the dashed lines in Figure 1a. An oblique bar element 10 is pivotally attached to the foot member 7 and the leg member 1, each end of said bar being provided with pivots 11 and 12. The leg member end of the bar is locked to the leg member 1 with a locking means, such as a lock pin 13, when the load is supported by the storage stands. The leg member end of the bar 10 is fitted to move in a gliding slot 14, fabricated into the side of the stand 1. When desired, into the support 1 can be fitted a spring 15, which is attached at its one end to the leg member 1 and at its other end to the end of the oblique bar 10, which is fitted into the glide slot 14. Instead of the spring 15 another suitable damping element, such as a shock absorber, may also be used.

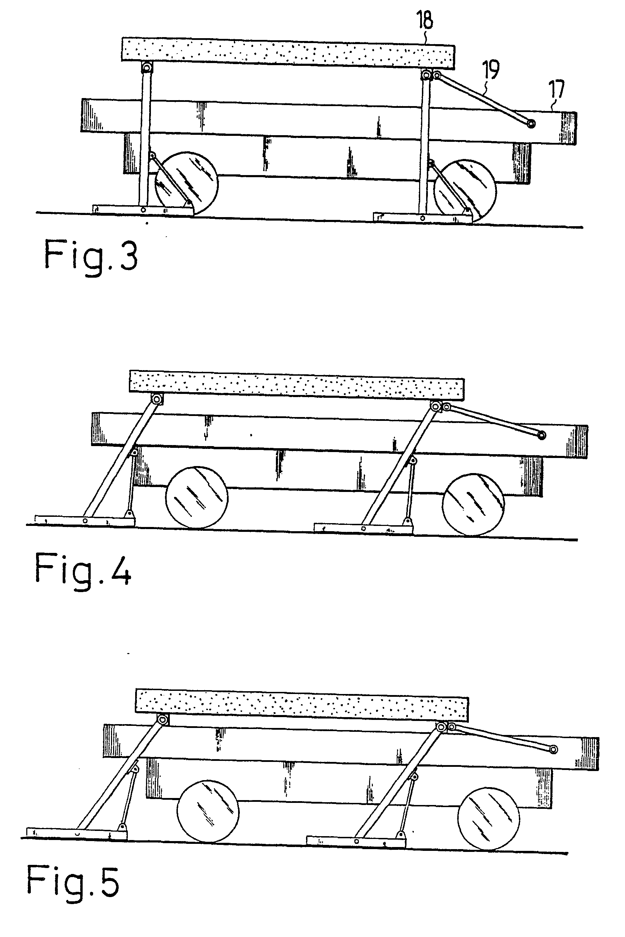

Figure 3 shows a situation in which the piece goods 18 are supported by the horizontal beam members 6 of the stands such that their support members 1, 7 form the contact faces against the base. A transportation bed 17 has been driven underneath the goods 18 in its longitudinal direction, whereby the bed 17 is also underneath the transverse beams 6.

A pulling bar 19 is attached to the leg member of one of the storage stands. Next, a force in the direction of arrow A is applied to the upper end of the stands via the pulling bar 19, moving the transportation bed forward in the direction of arrow A. Pivoting around the pivotal shaft 8, 9, the leg members are inclined by about 30...40°, and under the influence of the pulling force, the goods 18, supported by the stands, are forced into a movement directed forwards and downwards, the radius of curvature of the path of movement being the distance between the pivotal shaft 8, 9 and the upper surface of the transverse beam 6.

When the leg members reach a position in which inclination of the goods proceeds in an accelerating manner (Fig. 4), the inclination speed is attenuated by braking the movement of the vehicle. Now, the braking force is transferred to the pull bar 19, connecting the load to the transportation bed 17, thereby preventing an accelerating inclination. By installing into the support members 1 of the storage stand a spring 15, the attenuation of the inclinational movement of the leg members is assisted.

When the goods have reached the position shown in Figure 5 and thus have been transferred onto the transportation bed 17, the support members are detached from the transverse beam member by detaching the tube 3 from the tube 4. In a preferred embodiment of the stand, the tube 3 and the leg member connected to it are pivotally mounted to the transverse beam 6, whereby a maximum contact face is maintained between the goods 18 and the transverse beam 6 throughout the entire transfer movement and it is ensured that the goods remain steadily in support on the transverse beams 6 on the transportation bed.

The upper and lower surfaces of the transverse beam 6 are in this case preferably parallel and plane.

In the method in accordance with the invention, a stand shown in Figure 6 may also be used, having leg members 21 attached to a beam 22 via a pivotal shaft 23, 24 in the manner described above. The oblique bar member 25 consists of the actuating rod of a shock absorber or of a springloaded piston fitted into a cylinder. The bar member is also in this case attached at its both ends via pivots 26, 27 to the leg members 21 and the foot members 22, respectively. The bar 25 can be locked to its place by a locking pin 28. When a stand construction of this type is used, especially the initial phase of the inclination movement can be extremely effectively damped by a shock absorber or spring 29.

A third possible embodiment is shown in Figure 7 in which a vertical leg member 31 and one part of a foot member 32 are welded together, forming an L-shaped support member as a side view. The other part of the foot member 32, which is located in the inclination direction, is attached to the support member via a pivot 33. Said part is shaped such that it is at least slightly curving upwards, and to ensure the stable standing of the support, the underside of it is provided with a wedge bushing 36. The part of the pivotal foot member facing the L-shaped support is skew. The wedge-shaped slot between the support and the pivotal foot member is provided with a locking wedge 34. The wedge must be removed before the support is brought into the inclination movement. The radius of curvature of the surface of the pivotal foot member part is preferably variable in order to prevent an accelerating inclination. When the support is tilted in the manner shown in Figures 3...5, the curved foot member part operates as a rocking chair, and the stand transfers the load by a tilt, remaining, however, in a standing position after the tilt.

Without diverging from the scope of the claims, the method can be carried out in several different ways. Thus, the transportation bed may be driven to underneath the load in its transverse direction by driving the bed only under the load, not under the load-supporting transverse beams. By directing a pulling or pushing force to the load, as described above, the load can be shifted onto the transportation bed so that it remains transversely on the bed. In this case the storage stands are not left under the load and need not be dismantled for removal. The load may also remain on supports ready installed on the transportation bed, whereby, after the support members have been detached, the transverse beams can also be removed from the transportation bed.

## Claims

1. A method for the transfer of plate-shaped products (18), preferably construction panels, from a support means onto a transportation bed (17) for further transportation, said support means comprising two independent storage stands (1, 7, 6), each of said stands having two support members (1, 7) spaced from each other a predetermined distance, each of said support members having a horizontal foot member (7) facing the ground and a vertical leg member (1), the lower end of which is connected to the horizontal foot member via a pivot (8, 9), said stands (1, 7, 6) further having a horizontal beam member (6) interconnecting the upper ends of said vertical leg members, said leg members (1) being fitted normal to the longitudinal axis of said beam member (6), the beam members of said storage stands being placed in parallel relationship, wherein
- the transportation bed (17) is driven into a position under the goods (18) to be transferred,
- the stands (1, 7, 6) are subsequently tilted transversely to the longitudinal axes of the beam members (6) until the stands transfer the goods (18) onto the bed (17), and
- if, upon transference of the goods (18), the beam members (6) of the storage stands are positioned on the transportation bed (17) between said bed and said goods, the leg members (1) are detached from said beam members (6),

characterized by resisting the inclination movement of the stands by means of a damping member (15, 29) installed between the vertical leg member (1) of the stand and its horizontal foot member (7).

2. A method as claimed in claim 1, characterized by using a spring (15) or a shock absorber (29) as damping member.

3. An inclinable storage stand for carrying out the method of claim 1, comprising
- two support members (1, 7) spaced from each other a predetermined distance, each of said support members having a horizontal foot member (7) facing the ground and a vertical leg member (1), the lower end of which is connected to the horizontal foot member (7) via a pivot (8, 9) such that the leg member (1) is inclinable in relation to the foot member (7), and
- a horizontal beam member (6) interconnecting the upper ends of said vertical leg members, said leg members (1) being fitted normal to the longitudinal axis of said beam member (6),

characterized by a damping member (15, 29), one end of which is connected to the leg member (1), the other end being connected to the foot member (7) for resisting the inclination movement of the leg members (1) in relation to the foot members (7).

4. An inclinable storage stand as claimed in claim 3, characterized in that said damping member comprises an oblique bar (10), connected at its both ends by pivots (11, 12) to the vertical leg member (1) and the horizontal foot member (7), the pivot element (12) at the leg member end of which is further fitted to move in a gliding slot (14) that is provided with a damper element (15), e.g. a mechanically operating spring or a shock absorber, imposing a resistance force to the movement of the leg member end of the oblique bar (10).

5. An inclinable storage stand as claimed in claim 3, characterized in that said damping member comprises an oblique bar (25) provided with a damper element (29), e.g. a mechanically operating spring or a shock absorber, attached at its both ends by pivots (26, 27) to the vertical leg member (1) and the horizontal foot member (7).

**Patentansprüche**

1. Verfahren zur Übergabe plattenförmiger Produkte (18), vorzugsweise Bauplatten, von einem Trägermittel auf eine Transportunterlage (17) für den Weitertransport, wobei das Trägermittel zwei unabhängige Lagergestelle (1, 7, 6) umfaßt, jedes der Gestelle zwei in einem vorbestimmten Abstand voneinander befindliche Tragelemente (1, 7) hat und jedes der Tragelemente ein dem Boden zugewandtes horizontales Fußelement (7) und ein vertikales Beinelement (1) hat, dessen unteres Ende über einen Drehzapfen (8, 9) mit dem horizontalen Fußelement verbunden ist, und wobei die Gestelle (1, 7, 6) weiters ein die oberen Enden der vertikalen Beinelemente miteinander verbindendes horizontales Balkenelement (6) aufweisen, welche Beinelemente (1) normal zur Längsachse des Balkenelements (6) angebracht sind, wobei die Balkenelemente der Lagergestelle parallel angeordnet sind, worin

- die Transportunterlage (17) in eine Position unter den zu übergebenden Gütern (18) gefahren wird,
- die Gestelle (1, 7, 6) danach quer zu den Längsachsen der Balkenelemente (6) geneigt werden, bis die Gestelle die Güter (18) auf die Unterlage (17) übergeben, und
- wenn nach Übergabe der Güter (18) die Balkenelemente (6) der Lagergestelle auf der Transportunterlage (17) zwischen der Unterlage und den Gütern positioniert sind, die Beinelemente (1) von den Balkenelementen (6) gelöst werden,

dadurch gekennzeichnet, daß der Neigungsbewegung der Gestelle mittels eines zwischen dem vertikalen Beinelement (1) des Gestells und seinem horizontalen Fußelement (7) eingebauten Dämpferelements (15, 29) ein Widerstand entgegengebracht wird.

2. Verfahren, wie in Anspruch 1 beansprucht, dadurch gekennzeichnet, daß als Dämpferelement eine Feder (15) oder ein Stoßdämpfer (29) verwendet wird.

3. Neigbares Lagergestell zur Durchführung des Verfahrens des Anspruchs 1, umfassend

- zwei in einem vorbestimmten Abstand voneinander befindliche Tragelemente (1, 7), wobei jedes der Tragelemente ein dem Boden zugewandtes horizontales Fußelement (7) und ein vertikales Beinelement (1) hat, dessen unteres Ende mit dem horizontalen Fußelement (7) über einen Drehzapfen (8, 9) so verbunden ist, daß des Beinelement (1) in bezug auf das Fußelement (7) neigbar ist, und

- ein die oberen Enden der vertikalen Beinelemente miteinander verbindendes horizontales Balkenelement (6), wobei die Beinelemente (1) normal zur Längsachse des Balkenelements (6) angebracht sind,

gekennzeichnet durch ein Dämpferelement (15, 29), dessen eines Ende mit dem Beinelement (1) verbunden ist und dessen anderes Ende mit dem Fußelement (7) verbunden ist, um der Neigungsbewegung der Beinelemente (1) in bezug auf die Fußelemente (7) einen Widerstand entgegenzubringen.

4. Neigbares Lagergestell, wie in Anspruch 3 beansprucht, dadurch gekennzeichnet, daß das Dämpfungselement eine schräge Stange (10) umfaßt, die an ihren beiden Enden durch Drehzapfen (11. 12) mit dem vertikalen Beinelement (1) und dem horizontalen Fußelement (7) verbunden ist, das Schwenkelement (12) an seinem Beinelementende so angebracht ist, daß es sich in einem Gleitschlitz (14) bewegt, der mit einem Dämpferelement (15), z.B. einer mechanisch wirkenden Feder oder einem Stoßdämpfer versehen ist, die bzw. der eine Widerstandskraft gegen die Bewegung des Beinelementendes der schrägen Stange (10) aufbringt.

5. Neigbares Lagergestell, wie in Anspruch 3 beansprucht, dadurch gekennzeichnet, daß das Dämpferelement eine schräge Stange (25) umfaßt, die mit einem Dämpferelement (29), z.B. einer mechanisch wirkenden Feder oder einem Stoßdämpfer versehen ist, die bzw. der an beiden Enden durch Drehzapfen (26, 27) am vertikalen Beinelement (1) und am horizontalen Fußelement (7) befestigt ist.

**Revendications**

1. Procédé de transfert de produits sous forme de plaques (18), de préférence de panneaux de construction, d'un moyen formant support sur une plate-forme de transport (17) pour un transport ultérieur, ledit moyen formant support comprenant deux montants de stockage indépendants (1, 7, 6), chacun desdits montants ayant deux éléments de support (1, 7) espacés l'un de l'autre d'une distance prédéterminée, chacun desdits éléments de support ayant un élément formant base horizontale (7) qui fait face au sol et un élément formant pied vertical (1), dont l'extrémité inférieure est reliée à l'élément formant base horizontale par l'intermédiaire d'un pivot (8, 9), lesdits montants (1, 7, 6) ayant en outre un élément formant poutre horizontale (6) reliant les extrémités supérieures desdits éléments formant pieds verticaux, desdits éléments formant pieds (1) étant disposés perpendiculairement à l'axe longitudinal dudit élément formant poutre (6), les éléments formant poutres desdits montants de stockage étant disposés en relation parallèle, dans lequel

- la plate-forme de transport (17) est entraînée en une position sous les produits (18) à transférer,
- les montants (1, 7, 6) sont ensuite inclinés transversalement par rapport aux axes longitudinaux des éléments formant poutres (6) jusqu'à ce que les montants transfèrent les produits (18) sur la plate-forme (17), et

- si, lors du transfert des produits (18), les éléments formant poutres (6) des montants de stockage sont positionnés sur la plate-forme de transport (17) entre ladite plate-forme et lesdits produits, les éléments formant pieds (1) sont détachés desdits éléments formant poutres (6),

caractérisé par la résistance au mouvement d'inclinaison des montants au moyen d'un élément d'amortissement (15, 29) installé entre l'élément formant pied vertical (1) du montant et son élément formant base horizontale (7).

2. Procédé selon la revendication 1, caractérisé par l'utilisation d'un ressort (15) ou d'un amortisseur (29) en tant qu'élément d'amortissement.

3. Montant de stockage inclinable pour la mise en oeuvre du procédé de la revendication 1, comprenant

- deux éléments de support (1, 7) espacés l'un de l'autre d'une distance prédéterminée, chacun desdits éléments de support ayant un élément formant base horizontale (7) qui fait face au sol et un élément formant pied vertical (1), dont l'extrémité inférieure est reliée à l'élément formant base horizontale (7) par l'intermédiaire d'un pivot (8, 9) de telle façon que l'élément formant pied (1) soit inclinable par rapport à l'élément formant base (7), et

- un élément formant poutre horizontale (6) reliant les extrémités supérieures desdits éléments formant pieds verticaux, lesdits éléments formant pieds (1) étant disposés perpendiculairement à l'axe longitudinal dudit élément formant poutre (6), caractérisé par un élément d'amortissement (15, 29) dont l'une extrémité est reliée à l'élément formant pied (1), l'autre extrémité étant reliée à l'élément formant base (7) pour résister au mouvement d'inclinaison des éléments formant pieds (1) par rapport aux éléments formant base (7).

4. Montant de stockage inclinable selon la revendication 3, caractérisé en ce que ledit élément d'amortissement comprend une barre oblique (10) reliée à ses deux extrémités par des pivots (11, 12) à l'élément formant pied vertical (1) et à l'élément formant base horizontale (7), l'élément formant pivot (12) à l'extrémité de la barre tournée vers l'élément formant pied étant en outre disposé de façon à se déplacer dans une coulisse (14) qui est munie d'un élément d'amortissement (15), par exemple un ressort fonctionnant de façon mécanique ou un amortisseur, imposant une force de résistance au mouvement de l'extrémité de la barre oblique (10) tournée vers l'élément formant pied.

5. Montant de stockage inclinable selon la revendication 3, caractérisé en ce que ledit élément d'amortissement comprend une barre oblique (25) munie d'un élément d'amortissement (29), par exemple un ressort fonctionnant de façon mécanique ou un amortisseur, fixé à ses deux extrémités par des pivots (26, 27) à l'élément formant pied vertical (1) et à l'élément formant base horizontale (7).

Fig.1a

Fig.1c

Fig.1b

Fig.2

Fig.7

Fig.6

Fig.3

Fig.4

Fig.5